# EUROPÄISCHE PATENTSCHRIFT

(11) **EP 1 897 769 B1**
(45) Veröffentlichungstag und Bekanntmachung des Hinweises auf die Patenterteilung: **05.08.2009**
(21) Anmeldenummer: 07115682.2
(22) Anmeldetag: 05.09.2007
(51) Int. Cl.: B60S 1/66, B60J 7/12

(54) **Vorrichtung zur Entfernung von Regenwasser usw. auf Abdeckplanen von Fahrzeugen**
Device for removal of rainwater etc. from vehicle tarpaulins
Dispositif destiné à l'élimination d'eaux de pluie etc. de bâches de véhicules

(30) Priorität: 06.09.2006 AT 14882006
(43) Veröffentlichungstag der Anmeldung: 12.03.2008
(73) Patentinhaber: AMX Automation Technologies GmbH, 4040 Linz (AT)
(72) Erfinder: Schwaiger, Meinhard, 4040 Linz (AT)
(74) Vertreter: Babeluk, Michael

(56) Entgegenhaltungen:
- WO-A-20/05065975
- AT-U2- 8 172
- DE-U1- 20 318 965
- DE-U1- 29 920 069

## Beschreibung

Die Erfindung betrifft eine Vorrichtung gemäß dem Oberbegriff von Patentanspruch 1.

Eine solche Vorrichtung ist aus der DE 29920069 U bekannt.

Bei über einen bestimmten Zeitraum abgestellten Fahrzeugen mit Planenaufbauten, wie z.B. LKW und Fahrzeuganhängern, bilden sich nach Regenfällen, Schneefall oder Hagelschauern Vertiefungen in den Planen zwischen benachbarten Dachspanten in denen sich Regenwasser und Schnee sammeln und in weiterer Folge bei nachfolgendem Temperaturwechsel unter den Gefrierpunkt auch Eis bilden kann. Beim Anfahren oder bei Kurvenfahrten der Fahrzeuge kann es dabei aufgrund von Beschleunigungskräften zu einem Überschwappen von Regenwasser kommen. Während einer bestimmten Fahrtstrecke kann es dabei zu einem schwallartigen Abwurf von beträchtlichen Mengen an auf dem Dach des Fahrzeuges/Anhängers angesammeltem Regenwasser kommen. Befindet sich das Fahrzeug in dieser Situation, z.B. bereits auf einem befahrenen Straßenabschnitt, dann kann der Abwurf von Regenwasser u.U. nachfolgende oder entgegenkommende Fahrzeuge treffen und die Verkehrssicherheit negativ beeinträchtigen. Besonders gefährlich wirken sich in derartigen Situationen gefrorenes Wasser, welches in Form von Eisschollen abgeworfen wird und Schneeschollen aus, wenn diese auf ein nachkommendes oder vorbeifahrendes Fahrzeug auftreffen.

In zahlreichen Ländern existieren gesetzliche Vorschriften, die den Fahrzeuglenker verpflichten, die Planen eines Fahrzeuges/Anhängers bei Regen- oder Schneefall nach einem Stillstand des Fahrzeuges vor einer beabsichtigten Weiterfahrt diese von Regen oder Schnee zu befreien und dafür Sorge zu tragen, dass bei einer Ingangsetzung des Fahrzeuges keine Wassermassen oder Schneeschollen von der Fahrzeugplane abgeworfen werden können. Des Weiteren muss der Abwurf von Eisschollen sicher verhindert werden.

Seitens der Industrie gibt es mehrere Vorrichtungen und spezielle Einbauten, mit denen Regenwasser von den Planen abgezogen werden kann bzw. mit deren Hilfe Regenwasser von der Plane vor einer Fahrt abgeleitet werden kann.

Dem Stand der Technik entsprechen unterschiedliche Vorrichtungen, die mehrer Nachteile aufweisen und sich deshalb nicht in dem erwünschten Ausmaß durchsetzen konnten.

Die WO 2003/101772 beschreibt eine Vorrichtung zum sicheren Entfernen von Regenwasser auf Abdeckplanen von Lastkraftfahrzeugen und Anhängern, bestehend aus einem über die gesamte Länge des Anhängers bzw. der überdeckten Ladefläche sich erstreckenden massiven schlauchartigen elastischen Blähkörper, der im Bedarfsfall mittels Druckluft aus der Fahrzeug eigenen Druckluftversorgung beaufschlagt werden kann und sich dabei aufbläht. Dieser Blähkörper ist zwischen der Abdeckplane und den Dachspanten angeordnet. Im aufgeblähten Zustand wird dabei die Abdeckplane entlang der Fahrzeuglängsachse in der Mitte hochgestellt, sodass die Abdeckplane zu beiden Seiten schräg gestellt wird und Regenwasser zuverlässig ablaufen kann. Nachteilig wirkt sich bei dieser Vorrichtung die massive Bauweise des Blähkörpers aus, der sich über die gesamte Länge der Abdeckplane erstreckt, weshalb ein hoher Druckluftbedarf zum Befüllen des Blähkörpers gegeben ist, verbunden mit einer langen Befülldauer. Zwecks Verringerung des Druckluftbedarfs wird vorgeschlagen, statt dem in Längsachse durchgängigen schlauchartigen Blähkörper einzelne miteinander verbundene Schlauchabschnitte auf einem Spriegel abzustützen. Des Weiteren behindert der massive Blähkörper das Verschieben der Dachspanten, wenn diese zum erleichterten Be-/Entladen der Ladefläche entgegen der Fahrtrichtung des Fahrzeuges zurückgeschoben werden sollen. In einer weiteren Ausführungsvariante ist anstelle des Blähkörpers eine mechanische Spreizvorrichtung zur Anhebung der Abdeckplane in der Mitte in Längsachse vorgesehen, die jedoch dieselben Nachteile aufweist. Ein weiterer Nachteil ergibt sich während der Fahrt, weil, um eine einwandfreie Funktion zu gewährleisten, die üblicherweise vorhandenen Befestigungsschlaufen (zumeist drei in Querrichtung je Dachspante), mit denen die Abdeckplane auf den Dachspanten befestigt ist, geöffnet sein müssen und dadurch die Abdeckplane nicht mehr gegen Flattern gesichert ist.

Die EP 1 241 035 beschreibt eine mechanische Abdeckvorrichtung für Muldenfahrzeuge, mit deren Hilfe eine Abdeckplane von einer Seite der Mulde automatisiert über die Muldenfläche zur gegenüberliegenden Seite gebracht und die Mulde durch mechanisches Spannen der Abdeckplane abgedeckt werden kann. Aufgrund der Kinematik der Abdeckvorrichtung entsteht in der Mitte der Mulde eine dachartige Vorspannung der Abdeckplane, so dass Regenwasser etc. bevorzugt abfließt und sich nicht in allenfalls entstehenden Vertiefungen der Abdeckplane sammeln kann. Nachteilig wirken sich bei diesem System der hohe Komplexitätsgrad der Vorrichtung und die damit verbundenen hohen Kosten aus.

Die EP 0 078 248 beschreibt eine Spannvorrichtung für Abdeckplanen von Lastkraftfahrzeugen und Anhängern, mit deren Hilfe Abdeckplanen quer zur Längsachse des Fahrzeuges gespannt werden können. Diese Vorrichtung ist jedoch nur geeignet die Vorspannung der Abdeckplane zu beeinflussen, ein Anheben der Abdeckplane zur Überwindung entstandenen Mulden nach einer Ansammlung von z.B. Regenwasser ist jedoch nicht möglich, da eine derartige Einrichtung fehlt.

Die EP 1 106 409 beschreibt eine Vorrichtung zum örtlichen Anheben einer Abdeckplane zum Überwinden entstandener Mulden in der Abdeckplane durch Regenwasser, bestehend aus einem um eine Drehachse drehbaren Exzenter. Zwar ist mit dieser Vorrichtung das Anheben der Abdeckplane örtlich möglich, aufgrund der starren Vorrichtung können die Dachsparren jedoch nicht in Fahrtrichtung verschoben werden, um ein vereinfachtes Beladen des Fahrzeugen von oben zu ermöglichen.

Die EP 0 074 643 zeigt eine Spannvorrichtung für Abdeckplanen, die seitlich angeordnet sind und mit Druckluft beaufschlagt werden. Diese Spannvorrichtung erlaubt jedoch nur die Vorspannung der Abdeckplane um ein Flattern der Abdeckplane während der Fahrt zu verhindern. Diese Vorrichtung ist jedoch nicht geeignet, die Abdeckplane mittig an definierten Stellen anzuheben um Regenwasser abfließen zu lassen.

Die US 5,658,037 beschreibt eine Spannvorrichtung zum Vorspannen der Abdeckplane von Lastkraftfahrzeugen und Anhängern. Auch diese Vorrichtung ist nicht geeignet, die Abdeckplane definiert anzuheben um Regenwasser abfließen lassen zu können.

Die US 2,807,499 beschreibt eine Spannvorrichtung für Abdeckplanen von Lastkraftfahrzeugen und Anhängern. Auch diese Vorrichtung ist nicht geeignet, die Abdeckplane definiert anzuheben um Regenwasser abfließen lassen zu können.

Die DE 199 03 212 beschreibt eine Spannvorrichtung für Abdeckplanen von Lastkraftfahrzeugen und Anhängern mittels einer Spiralfederwirkung. Auch diese Vorrichtung ist nicht geeignet die Abdeckplane definiert anzuheben, um Regenwasser abfließen lassen zu können.

Die WO 1995/22472 beschreibt eine Vorrichtung zum sicheren Entfernen von Regenwasser auf Abdeckplanen von Lastkraftfahrzeugen und Anhängern, bestehend aus einem über die gesamte Länge des Anhängers bzw. der überdeckten Ladefläche sich erstreckenden massiven schlauchartigen elastischen Blähkörper, der im Bedarfsfall mittels Druckluft aus der Fahrzeug eigenen Druckluftversorgung beaufschlagt werden kann und sich dabei aufbläht. Dieser Blähkörper ist zwischen der Abdeckplane und den Dachspanten angeordnet. Im aufgeblähten Zustand wird dabei die Abdeckplane entlang der Fahrzeuglängsachse in der Mitte hochgestellt, sodass die Abdeckplane zu beiden Seiten schräg gestellt wird und Regenwasser zuverlässig ablaufen kann. Nachteilig wirkt sich bei dieser Vorrichtung die massive Bauweise des Blähkörpers aus, der sich über die gesamte Länge der Abdeckplane erstreckt, wodurch verhindert wird, dass die Abdeckplane und die Dachspanten zum erleichterten Be-/Entladen der Ladefläche entgegen der Fahrtrichtung des Fahrzeuges zurückgeschoben werden können. In einer weiteren Ausführungsvariante wird anstelle des Blähkörpers eine mechanische Spreizvorrichtung zur Anhebung der Abdeckplane in der Mitte in Längsachse vorgesehen, die jedoch dieselben Nachteile aufweist.

Die EP 0 897 827 beschreibt eine Vorrichtung zum sicheren Entfernen von Regenwasser auf Abdeckplanen von Lastkraftfahrzeugen und Anhängern, bestehend aus einem über die gesamte Länge des Anhängers bzw. der überdeckten Ladefläche sich erstreckenden massiven Hebevorrichtung, die im Bedarfsfall mittels Druckluft aus der Fahrzeug eigenen Druckluftversorgung beaufschlagt werden kann und sich dabei anhebt. Diese Vorrichtung ist zwischen der Abdeckplane und den Dachspanten angeordnet. Im angehobenen Zustand wird dabei die Abdeckplane entlang der Fahrzeuglängsachse in der Mitte hochgestellt, so dass die Abdeckplane zu beiden Seiten schräg gestellt wird und Regenwasser zuverlässig ablaufen kann. Nachteilig wirkt sich bei dieser Vorrichtung die massive Bauweise aus, die sich über die gesamte Länge der Abdeckplane erstreckt, wodurch verhindert wird, dass die Abdeckplane und die Dachspanten zum erleichterten Be-/Entladen der Ladefläche entgegen der Fahrtrichtung des Fahrzeuges zurückgeschoben werden können.

Die DE 28 20 677 beschreibt eine Abdeckplane für Lastkraftfahrzeuge, wobei die Abdeckplane mit elastischen Segmenten ausgebildet ist, die zum Zwecke der besseren Beladung/Entladung des Laderaumes entfernbar sind. Diese elastischen Segmente können jedoch nicht definiert angehoben werden, um z.B. Regenwasser zuverlässig abzuleiten.

Aufgabe der gegenständlichen Erfindung ist es, eine Vorrichtung zu schaffen, mit deren Hilfe zuverlässig angesammeltes Regenwasser, Eis und Schnee von der Abdeckplane eines Lastkraftfahrzeuges bzw. Anhängers entfernt werden kann, die besonders einfach aufgebaut ist und einen geringen Energiebedarf erfordert, sodass auch ein Nachrüsten der Vorrichtung jederzeit möglich und ein Verschieben der Dachspanten und der Abdeckplane in Fahrtrichtung jederzeit zwecks vereinfachter Be-/Entladung des Fahrzeuges von oben ermöglicht wird.

Eine besondere Aufgabe der Erfindung ist es, eine Lösung anzugeben, die es einerseits ermöglicht, eine dachförmige Konfiguration der Abdeckplane sicher und einfach zu erreichen und die andererseits eine dicht an den Wagenkörper anliegende Konfiguration für die Fahrt ermöglicht, wobei das Flattern der Plane weitgehend unterdrückt wird.

Erfindungsgemäß werden diese Aufgaben durch die Merkmale von Patentanspruch 1 gelöst. Durch das Vorsehen einer Vielzahl kleinerer Blähkörper, die seitlich versetzt angeordnet sind, kann eine komplexe Topologie der Plane erzeugt werden, was das Ablaufen von Regenwasser erheblich erleichtert. Darüber hinaus ist im entleerten Zustand der Blähkörper die Befestigungswirkung besonders gut.

Wesentlich an der Erfindung ist weiters, dass die Blähkörper nicht nur dazu dienen, die Plane in eine dachartige Stellung zu bringen, in der das Regenwasser optimal abgeleitet werden kann, sondern auch eine zweite Funktion aufweisen, nämlich die, eine zusätzliche Befestigung an den Dachspanten zu bieten. Dies wird dadurch erreicht, dass in zusammengebautem Zustand die Blähkörper sowohl an der Plane als auch an den darunter liegenden Spanten befestigt sind. Wenn nun die Blähkörper vollständig entlüftet sind und besonders vorzugsweise durch ein Absperrventil von der Umgebung getrennt sind, dann ist die Abdeckplane bei den Blähkörpern fest mit den Abdeckspanten verbunden, wodurch das Flattern der Plane zuverlässig verhindert wird.

Eine Vereinfachung des Aufbaus kann dadurch erreicht werden, dass mehrere Blähkörper gemeinsam von einer Druckluftleitung mit Druckluft versorgt sind.

Für besonders kritische Anwendungen ist es insbesondere bevorzugt, wenn mehrere Blähkörper auf einem gemeinsamen Dachspanten nebeneinander angeordnet sind. Auf diese Weise können sowohl der aufgestellte Zustand, als auch der flach anliegende Zustand in besonders sicherer und definierter Weise erreicht und gehalten werden.

Von besonderem Vorteil ist es, ein Schaltventil vorzusehen, über das die Druckluft in die Blähkörper eingeleitet und aus den Blähkörpern abgesaugt werden kann und das in geschlossenem Zustand die Blähkörper von der Umgebung trennt. Bei den Lösungen nach dem Stand der Technik, die nur Blähkörper vorsehen, die das Aufstellen der Plane bewirken, ist ein solches Schaltventil nicht erforderlich, da es völlig ausreicht, eine Verbindung der Blähkörper mit der Umgebung herzustellen, so dass das Gewicht der Plane die Blähkörper entleert. Bei der erfindungsgemäßen Lösung bringt es jedoch einen besonderen Vorteil, ein zusätzliches Schaltventil vorzusehen, um zu verhindern, dass in Folge von aerodynamischen Effekten an der Fahrzeugaußenseite eine Saugwirkung bei einem Teil der Blähkörper auftritt, die eine Rückströmung von Luft in die Blähkörper bewirken würde. Durch das Versperren des Schaltventils kann dies zuverlässig verhindert werden, so dass eine plane Lage der Blähkörper gewährleistet ist.

In der Folge wird die Erfindung anhand der in den Figuren dargestellten Ausführungsbeispiele näher erläutert. Es zeigen:
- Fig. 1: ein Fahrzeug mit einem Aufbau gemäß der Stand der Technik;
- Fig. 2: ein Fahrzeug mit einer erfindungsgemäßen Vorrichtung in einer axonometrischen Darstellung;
- Fig. 3: ein Fahrzeug nach dem Stand der Technik in einer Ansicht von hinten;
- Fig. 4: ein Fahrzeug mit einer erfindungsgemäßen Vorrichtung in einer Darstellung entsprechend Fig. 3;
- Fig. 5: eine weitere Ausführungsvariante der Erfindung in einer Darstellung gemäß Fig. 3 und Fig. 4;
- Fig. 6: eine weitere Ausführungsvariante in einer Darstellung gemäß Fig. 3 bis Fig. 5; und
- Fig. 7: schematisch ein Diagramm, das die pneumatische Schaltung erklärt.

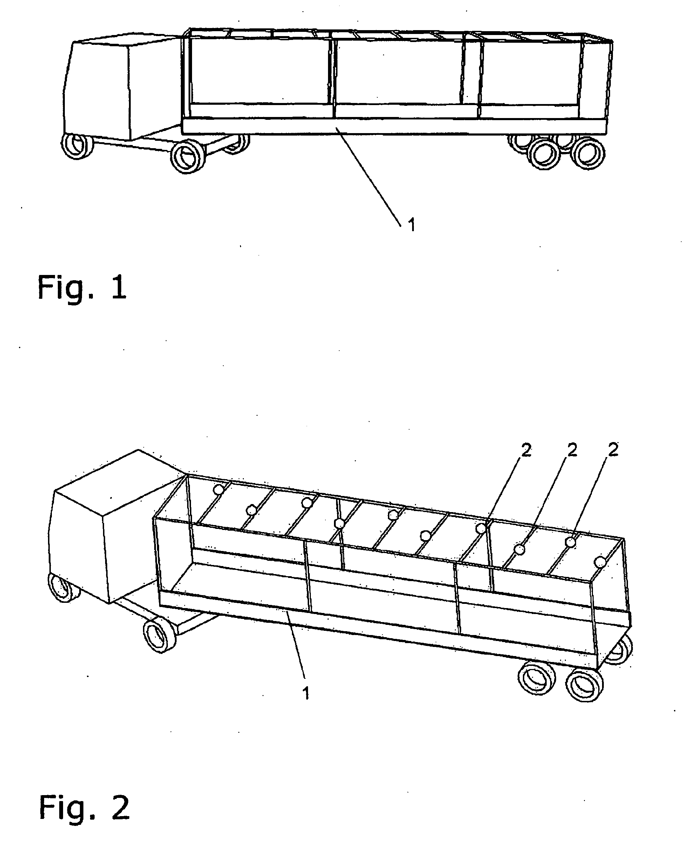

Fig. 1 zeigt ein Fahrzeug 1 mit Aufbauten für eine Abdeckplane ohne Blähkörper.

Fig. 2 zeigt ein Fahrzeug 1 mit einer Vorrichtung der bevorzugten Ausführungsvariante mit seitlich versetzt angeordneten Blähkörpern 2; die Abdeckplane 3 ist hier der besseren Sichtbarkeit wegen abgenommen.

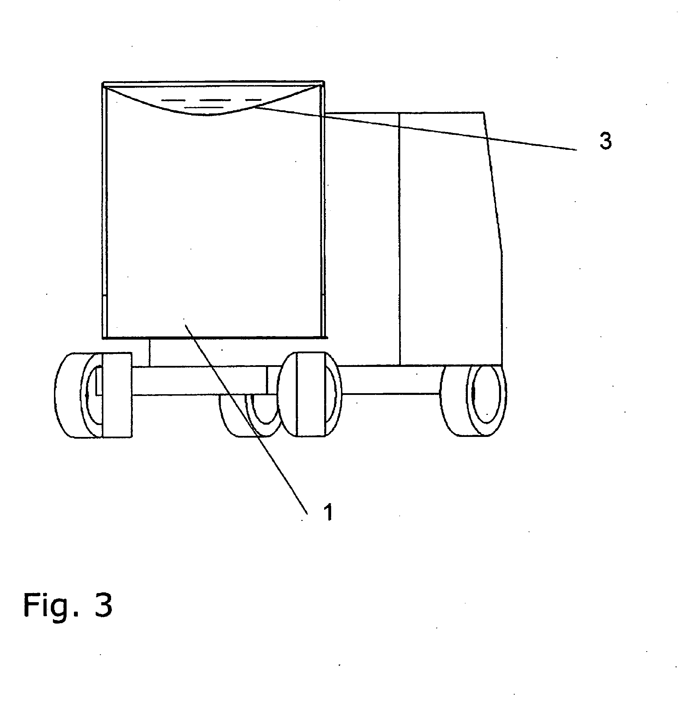

Fig. 3 zeigt ein Fahrzeug von hinten mit der Deformation der Abdeckplane 3, wie sie bei z. B. Regenwasseransammlung typischerweise entsteht.

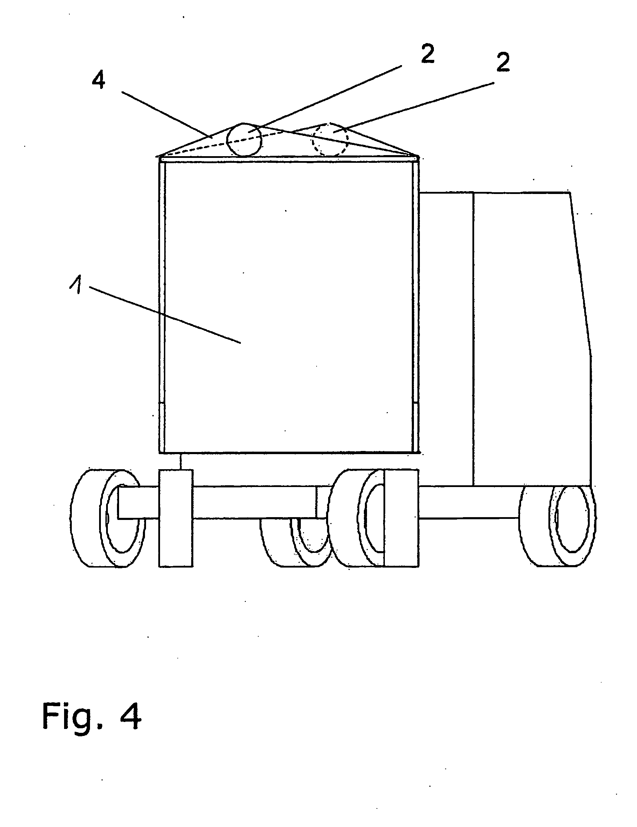

Fig. 4 zeigt ein Fahrzeug mit einer Vorrichtung der bevorzugten Ausführungsvariante mit einer Abdeckplane 3 und Blähkörpern 2 in aufgeblähtem Zustand; die "zeltartige" Erhöhung der Abdeckplane 3 ist ersichtlich.

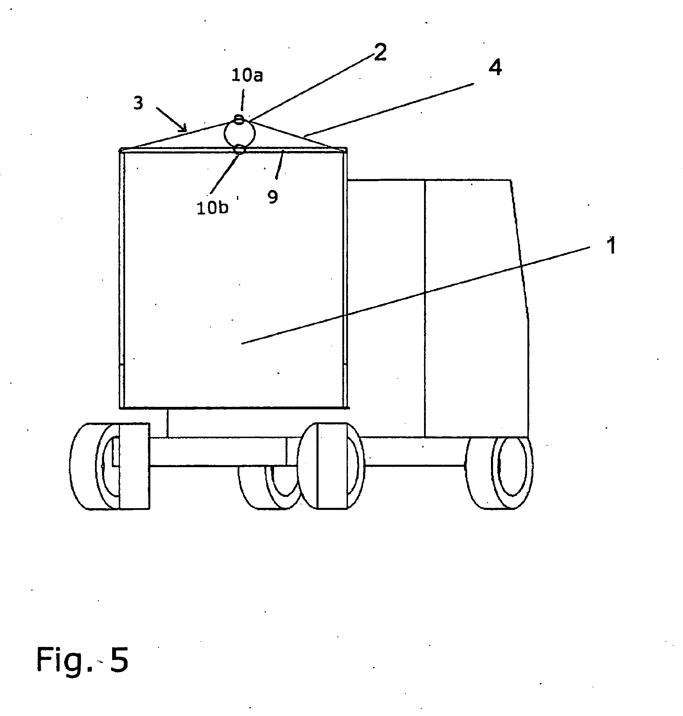

Fig. 5 zeigt ein Fahrzeug mit einer Vorrichtung in einer weiteren Ausführungsvariante mit Blähkörpern 2, deren Größe im aufgeblasenen Zustand optimal die zeltartige Erhöhung der Abdeckplane 3 erzeugen. Im drucklosen Zustand liegt die Abdeckplane 3, gegen Flattern geschützt, mittels der evakuierten Blähkörper 2 fest auf den Dachspanten 9 auf. Dabei bilden sich dachartige Abschrägungen 4, die das Ablaufen von Regenwasser gewährleisten. Wesentlich ist, dass die Blähkörper 2 mit der Plane 3 an deren Oberseite 10a verbunden sind, während sie an ihrer Unterseite bei 10b mit den Dachspanten 9 verbunden sind.

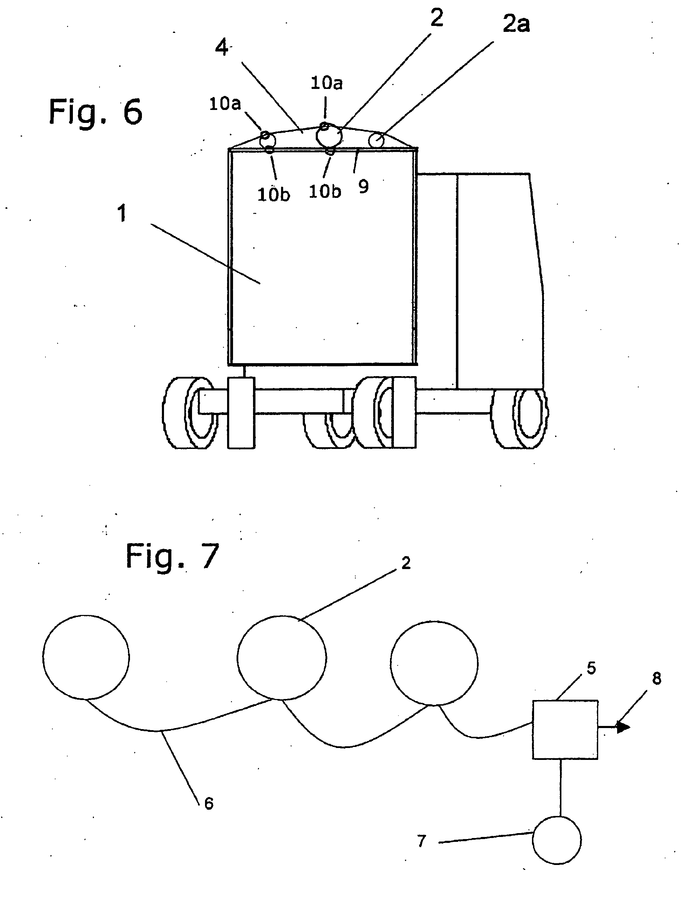

Fig. 6 zeigt eine Ausführungsvariante, bei der auf einem Dachspanten 9 mehrere Blähkörper 2, 2a nebeneinander angeordnet sind. Die mittigen Blähkörper 2 sind dabei größer ausgebildet als die seitlich angeordneten Blähkörper 2a.

Fig. 7 zeigt die Versorgung mehrerer Blähkörper 2 mit Druckluft über eine gemeinsame Druckluftleitung 6 und einem Ventil 5. Mittels der Druckluftversorgung 7 wird über das Ventil 5 Druckluft in die Blähkörper geleitet. Mit dem Ventil 5 wird die Druckluft aus dem System über ein Ausströmöffnung 8 abgeleitet, so dass die Blähkörper drucklos geschaltet werden können. Nachdem die Druckkörper drucklos geschaltet worden sind, wird das Ventil 5 geschlossen, so dass während der Fahrt die Abdeckplane nicht flattern kann, weil keine Luft in die Blähkörper 2 einströmen kann.

## Patentansprüche

1. Vorrichtung zur sicheren Entfernung von Regenwasser, Schnee oder Eis auf Abdeckplanen (3) von Lastkraftfahrzeugen und Anhängern mit mehreren Blähkörpern (2), die dazu ausgebildet sind, die Abdeckplane (3) mittels Druckluft lokal anzuheben, wobei die Blähkörper (2) sowohl an der Abdeckplane (3) als auch an den darunter befindlichen Dachspanten (9) befestigt sind, **dadurch gekennzeichnet, dass** Blähkörper (2) die abwechselnd seitlich gegenüber der Fahrzeuglängsachse versetzt angeordnet sind.

2. Vorrichtung nach Anspruch 1, **dadurch gekennzeichnet, dass** mehrere Blähkörper (2) gemeinsam von einer Druckluftleitung (6) mit Druckluft versorgt sind.

3. Vorrichtung nach Anspruch 1 oder 2, **dadurch gekennzeichnet, dass** mehrere Blähkörper (2) auf einem gemeinsamen Dachspanten (9) nebeneinander angeordnet sind.

4. Vorrichtung nach einem der Ansprüche 1 bis 3, **dadurch gekennzeichnet, dass** ein Schaltventil (5) vorgesehen ist, über das die Druckluft in die Blähkörper (2) eingeleitet und aus den Blähkörpern (2) abgesaugt werden kann und das in geschlossenem Zustand die Blähkörper (2) von der Umgebung trennt.

5. Vorrichtung nach einem der Ansprüche 1 bis 4, **dadurch gekennzeichnet, dass** die Blähkörper (2) kleine elastische Elemente sind, die ein Zusammenschieben der Dachspanten (9) in Fahrtrichtung ermöglichen.

6. Vorrichtung nach einem der Ansprüche 1 bis 5, **dadurch gekennzeichnet, dass** die Anzahl der Blähkörper (2) kleiner als die Anzahl der Dachspanten (9) ist.

7. Vorrichtung nach einem der Ansprüche 1 bis 6, **dadurch gekennzeichnet, dass** zur Druckluftversorgung ein Druckluftaggregat vorgesehen ist.

8. Vorrichtung nach einem der Ansprüche 1 bis 7, **dadurch gekennzeichnet, dass** diese bestehend aus einer Abdeckplane (3) und mehreren in Fahrtrichtung angeordneten Blähkörpern (2) als Gesamteinheit als Abdeckung auf Containern oder Kastenwagen montiert werden kann.

9. Vorrichtung nach einem der Ansprüche 1 bis 8, **dadurch gekennzeichnet, dass** die Blähkörper (2) mit einem pulsierenden Druck beaufschlagbar sind, um auf der Abdeckplane (3) anhaftendes Eis oder Schnee definiert aufzubrechen und abwerfen zu können.

10. Vorrichtung nach einem der Ansprüche 1 bis 9, **dadurch gekennzeichnet, dass** die Blähkörper (2) mit Unterdruck beaufschlagt werden können, damit diese in sich zusammengezogen werden können und eine besonders stabile Verbindung der Abdeckplane (3) mit den Dachspanten (9) erzeugt werden kann.

## Claims

1. An apparatus for securely removing rainwater, snow or ice on tarpaulins (3) of trucks and trailers, comprising several inflatable bodies (2) which are arranged to locally lift the tarpaulins (3) by means of compressed air, with the inflatable bodies (3) are fastened both to the tarpaulin (3) as well as the roof struts (9) disposed beneath the same, **characterised in that** the inflatable bodies (2) are arranged in an alternating manner laterally offset relative to the longitudinal axis of the vehicle.

2. An apparatus according to claim 1, **characterised in that** several inflatable bodies (2) are supplied jointly with compressed air by a compressed-air line (6).

3. An apparatus according to claim 1 or 2, **characterised in that** several inflatable bodies (2) are arranged on a common roof strut (9) next to one another.

4. An apparatus according to one of the claims 1 to 3, **characterised in that** a switching valve (5) is provided through which the compressed air can be introduced into the inflatable bodies (2) and can be drawn off from the inflatable bodies (2) and which separates the inflatable bodies (2) from the ambient environment in the closed state.

5. An apparatus according to one of the claims 1 to 4, **characterised in that** the inflatable bodies (2) are small elastic elements which enable the roof struts (9) to be pushed together in the direction of travel.

6. An apparatus according to one of the claims 1 to 5, **characterised in that** the number of inflatable bodies (2) is smaller than the number of roof struts (9).

7. An apparatus according to one of the claims 1 to 6, **characterised in that** a compressed-air unit is provided for compressed-air supply.

8. An apparatus according to one of the claims 1 to 7, **characterised in that** the same can be mounted in the form of a complete unit as a cover on containers or box-type delivery vans, consisting of a tarpaulin (3) and several inflatable bodies (2) arranged in the direction of travel.

9. An apparatus according to one of the claims 1 to 8, **characterised in that** the inflatable bodies (2) can be subjected to a pulsating pressure in order to break up and throw off in a defined manner any ice or snow which adheres to the tarpaulin.

10. An apparatus according to one of the claims 1 to 9, **characterised in that** the inflatable bodies (2) can be subjected to a negative pressure so that they can be contracted and an especially stable connection of the tarpaulin (3) with the roof struts (9) can be produced.

## Revendications

1. Dispositif pour garantir l'évacuation des eaux de pluie, de la neige ou de la glace sur les bâches (3) de camions et de remorques à l'aide de plusieurs organes gonflables (2) réalisés pour soulever localement la bâche (3) par de l'air comprimé, les organes gonflables (2) étant fixés à la fois à la bâche (3) et aussi aux traverses supérieures (9) qui se trouvent en dessous de celle-ci,
**caractérisé en ce que**
les organes gonflables (2) sont installés de manière décalée alternativement d'un côté et de l'autre par rapport à l'axe longitudinal du véhicule.

2. Dispositif selon la revendication 1,
**caractérisé en ce que**
plusieurs organes gonflables (2) sont alimentés en air comprimé en commun à partir d'une conduite d'air comprimé (6).

3. Dispositif selon la revendication 1 ou 2,
**caractérisé en ce que**
plusieurs organes gonflables (2) sont juxtaposés sur une traverse supérieure (9), commune.

4. Dispositif selon les revendications 1 à 3,
**caractérisé par**
une vanne de commutation (5) qui alimente les organes gonflables (2) en air comprimé et permet l'aspiration de l'air des organes gonflables (2), et à l'état fermé, cette vanne de commutation coupe les organes gonflables (2) par rapport à l'environnement.

5. Dispositif selon les revendications 1 à 4,
**caractérisé en ce que**
les organes gonflables (2) sont de petits éléments élastiques permettant de réunir les entretoises supérieures (9), par coulissement dans la direction de déplacement.

6. Dispositif selon les revendications 1 à 5,
**caractérisé en ce que**
le nombre d'organes gonflables (2) est inférieur au nombre de traverses supérieures (9).

7. Dispositif selon les revendications 1 à 6,
**caractérisé en ce que**
l'alimentation en air comprimé est assurée par un groupe compresseur d'air.

8. Dispositif selon les revendications 1 à 7,
**caractérisé en ce qu'**
il se compose d'une bâche (3) et de plusieurs organes gonflables (2) installés dans la direction de déplacement, constituant un ensemble pour couvrir des conteneurs ou des véhicules à caissons.

9. Dispositif selon les revendications 1 à 8,
**caractérisé en ce que**
les organes gonflables (2) reçoivent une pression pulsée pour casser et éjecter de manière définie la glace ou la neige accrochées à la bâche (3).

10. Dispositif selon les revendications 1 à 9,
**caractérisé en ce que**
les organes gonflables (2) sont soumis à une dépression pour permettre de les rétracter et de réaliser une liaison particulièrement solide entre la bâche (3) et les traverses supérieures (9).
